Europäisches Patentamt

European Patent Office

Office européen des brevets

(11) Publication number : **0 506 490 A1**

(19)

# EUROPEAN PATENT APPLICATION

(21) Application number : **92302797.3**

(22) Date of filing : **30.03.92**

(51) Int. Cl.⁵ : **B60C 9/20, D03D 13/00**

(30) Priority : **29.03.91 JP 92984/91**

(43) Date of publication of application :
**30.09.92 Bulletin 92/40**

(84) Designated Contracting States :
**DE FR GB**

(71) Applicant : **SUMITOMO RUBBER INDUSTRIES LIMITED**
**1-1 Tsutsuicho 1-chome Chuo-ku**
**Kobe-shi Hyogo-ken (JP)**

(72) Inventor : **Nakasaki, Eiji**
**629 Kimura, kakogawacho**
**Kakogawa-shi, Hyogo-ken (JP)**
Inventor : **Kato, Masayuki**
**10-30-805, Motoyama-minamimachi 3-chome**
**Higashinada-ku, Kobe-shi, Hyogo-ken (JP)**

(74) Representative : **Stewart, Charles Geoffrey**
**SP TYRES UK LIMITED Tyre Technical Division**
**Fort Dunlop, Erdington, Birmingham B24 9QT (GB)**

(54) **Pneumatic tyre.**

(57) A pneumatic tyre (1) provided with a belt ply (10) made of woven cord fabric comprising cords (11) in three groups (12X, 12Y and 12Z) woven together, the cords in each of the three groups being laid parallel, and the cord direction (x) of the first cord group (12X), the cord direction (y) of the second cord group (12Y) and the cord direction (z) of the third cord group (12Z) being different from each other.

Fig.1

EP 0 506 490 A1

The present invention relates to a pneumatic tyre having an improved belt structure, in which belt rigidity is uniformly increased.

In general, in order to reinforce the tread portion of a radial ply tyre and thereby to improve various tyre performance factors such as rolling resistance, steering stability, high speed durability and the like, a belt made of unwoven steel cord fabric has been used.

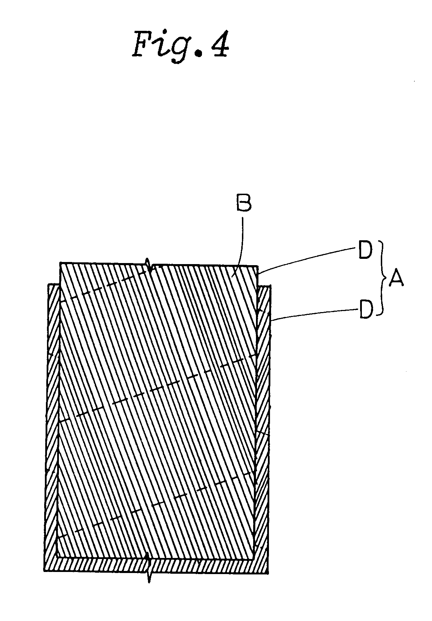

As shown in Fig.4, such a belt (A) usually comprises at least two plies (D) with the cords of each ply crossing the other ply cords disposed one upon the other. Also the steel belt cords (B) are inclined at an acute angle with respect to the tyre equator for example at about 20 degrees.

In such a conventional belt structure, the cords are liable to move relatively to the cords in the adjacent ply and also within the ply when the tyre inflation pressure is varied and when the tyre is deformed, which results in uneven distribution of reinforcement or rigidity and a decrease in the hoop effect of the belt. To avoid those problems, if the number of belt plies is increased, the tyre weight is inevitably increased, which results in deterioration in running performance.

It is an object of the present invention to provide a pneumatic tyre, in which by improving the belt structure, the tread is evenly reinforced to improve tyre running performance and the number of belt ply can be decreased to reduce tyre weight while maintaining running performance.

According to one aspect of the present invention, a pneumatic tyre comprises a carcass extending between bead portions and a belt disposed radially outside the carcass, characterised in that the belt comprises woven cord fabric which comprises cords in three groups woven together, the cords in each of the three groups are laid parallel with each other, and the cord direction of the first cord group, the cord direction of the second cord group and the cord direction of the third cord group are different from each other.

By weaving the cords, movement of the belt cords is restricted, and the stiffness of the belt ply is increased. Further, as the cords are tightly joined to each other, stress is dispersed, and the durability is improved. Even if cut ends of the fabric are located at the axial edges of the belt ply, cord looseness and resultant separation failure are prevented, and high speed durability of the tyre is improved.

Further, as the belt cords run in three different directions, dependency of the belt rigidity on direction is improved, that is, the belt ply is provided with non- or less-directional rigidity, and thereby tyre uniformity, handling stability, and running stability can be improved.

An embodiment of the present invention will now be described in detail in conjunction with the drawings, in which:

Fig.1 is a schematic cross sectional view of a tyre according to the invention;

Figs.2(a)-(b) are enlarged plan views of examples of fabric used for the belt ply thereof;

Figs.3(a)-(d) are schematic cross-sectional views of other examples of the belt; and

Fig.4 is a plan view of the conventional belt structure.

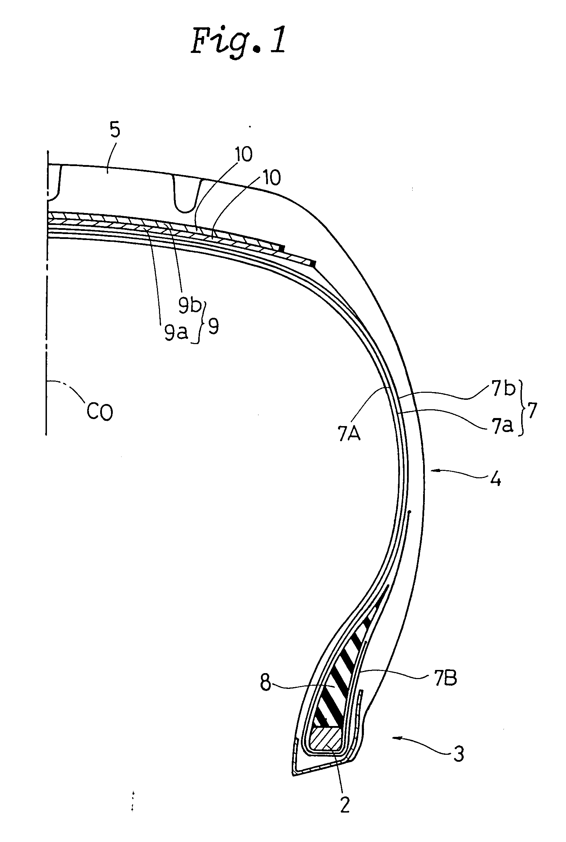

In Fig.1, a tyre 1 comprises a tread 5, a pair of axially spaced bead portions 3, each of which is provided with a bead core 2, a pair of sidewalls 4 extending between the tread edges and the bead portions 3, a carcass 7 extending between the bead portions 3 and turned up around the bead cores 2 from the axially inside to the outside thereof to form a main portion 7A and two turned up portions 7B. A belt 9 is disposed radially outside the carcass 7.

The carcass 7 comprises at least one ply, in this embodiment two plies 7a and 7b, of cords arranged radially at an angle in the range of 70 to 90 degrees with respect to the tyre equator CO.

Both the inner carcass ply 7a and the outer carcass ply 7b are turned up around the bead cores 2 from the axially inside to outside thereof.

The turned up portions of the inner carcass ply 7a are extended radially outwards over the edges of the turned up portions of the outer carcass ply 7b so as to cover the edges, and terminated near the tyre maximum width point.

Each of the bead portions 3 is provided between the carcass main portion 7A and turned up portion 7B with a hard rubber bead apex 8. The bead apex 8 is tapered and extends radially outwards from the bead core 2 so as to reinforce the bead portion and lower sidewall portion in combination with the high carcass turned up structure.

The belt 9 in this embodiment is composed of two plies: a radially inner ply 9a disposed on the carcass crown and a radially outer ply 9b disposed on the radially outside of the inner ply 9a.

In order to avoid stress concentration, the inner belt ply edges are not aligned with the outer belt ply edges, and the inner belt ply 9a is wider than the outer belt ply 9b.

In this embodiment, each of the inner and outer belt plies 9a and 9b is made of a strip of tridirectional woven cord fabric 10.

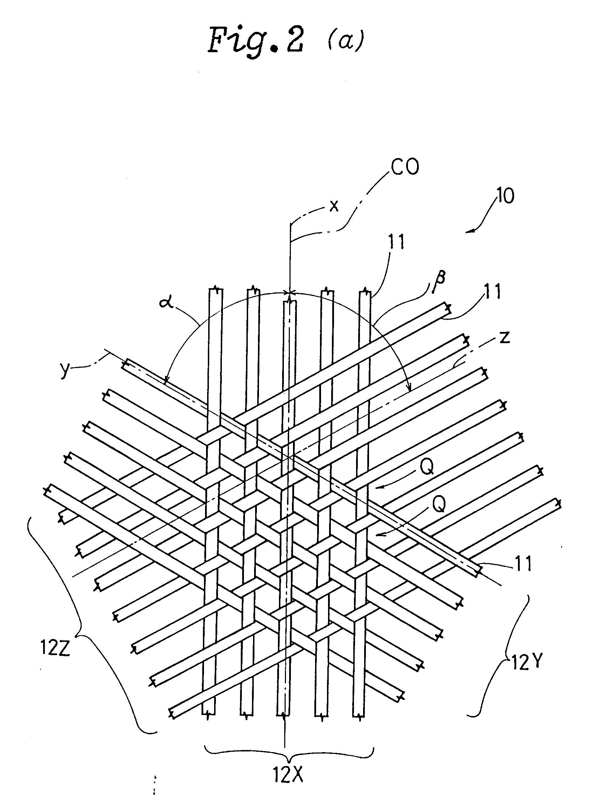

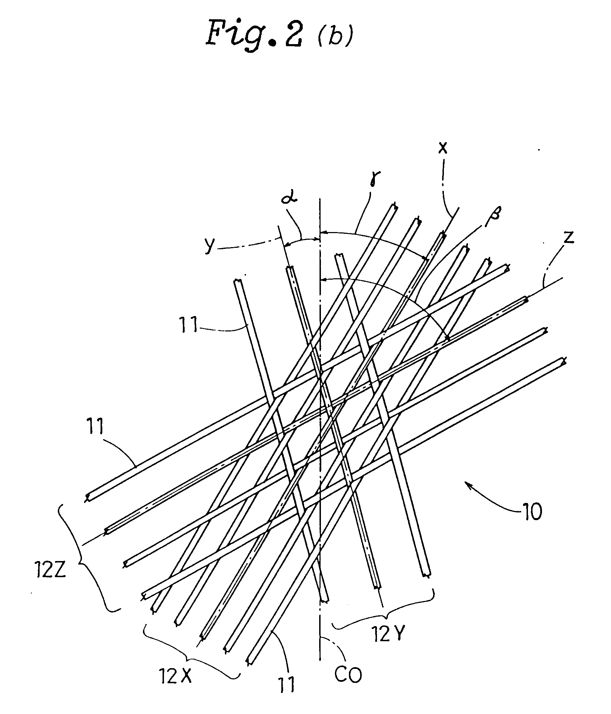

The above-mentioned tridirectional woven cord fabric 10 is made of a first group 12X of belt cords 11, a second group 12Y of belt cords 11 and a third group 12Z of belt cords 11, which are woven together, as shown in Figs.2(a)-(b).

In each of the three groups 12X, 12Y and 12Z, the belt cords 11 are laid parallel to each other.

The cord direction (x) of the group 12X, the cord direction (y) of the group 12Y and the cord direction (z) of the group 12Z are different from each other.

In Fig.2(a), the parallel cords in the second group 12Y run alternately in front of and behind the parallel cords of the first group 12X in the same manner between all the cords in the group 12Y, and the parallel cords in the third group 12Z run alternately in front of and behind the parallel cords of the first group 12X in the same manner between all the cords in the group 12Z but in the reverse manner to the second group 12Y.

In this embodiment, the angles between the three cord directions (x), (y) and (z) are 120 degrees.

Further, one of the cord directions, the direction (x), is substantially the same as the circumferential direction of the tyre.

Therefore, when measured in the clockwise direction, the angle between the cord direction (x) of the first group 12X and the tyre circumferential direction CO is substantially zero, the angle (alpha) between the cord direction (y) of the second group 12Y and the circumferential direction CO is substantially - 60 degrees, and the angle (beta) between the cord direction (z) of the third group 12Z and the tyre circumferential direction CO is substantially + 60 degrees.

Fig.2(b) shows another example of the tridirectional woven cord fabric 10, where the angles between the three cord directions (x), (y) and (z) are varied. For exsample, the angles are set in the range from 10 to 45 degrees. In such a case, the individual cord directions are as follows:

the angle (gamma) between the cord direction (x) of the first group 12X and the tyre circumferential direction CO is in the range from + 10 to + 30 degrees; the angle (alpha) between the cord direction (y) of the second group 12Y and the circumferential direction CO is in the range from - 10 to - 30 degrees; and the angle (beta) between the cord direction (z) of the third group 12Z and the tyre circumferential direction CO is in the range from + 40 to + 70 degrees.

In still another embodiment, the directions (x), (y) and (z) are set as follows:

the angle (gamma) between the cord direction (x) of the first group 12X and the tyre circumferential direction CO is in the range from + 10 to + 45 degrees; the angle (alpha) between the cord direction (y) of the second group 12Y and the circumferential direction CO is in the range from - 10 to - 45 degrees; and the angle (beta) between the cord direction (z) of the third group 12Z and the tyre circumferential direction CO is in the range from + 10 to + 45 degrees.

In general, the belt ply 10 is formed by winding a strip of the above-mentioned tridirectional woven cord fabric around the carcass, and then bias cut ends of the strip are overlap jointed to form one bias joint. However, the belt ply 10 is preferably formed in an endless annular body.

The cord counts in the respective cord groups are usually constant or the same values, but may be varied as shown in Fig.2(b).

For good i.e. low tyre weight and good running performance, aromatic polyamide fibre cords are preferably used for the belt cords 11, but other materials including organic materials and inorganic material, e.g. steel can be used.

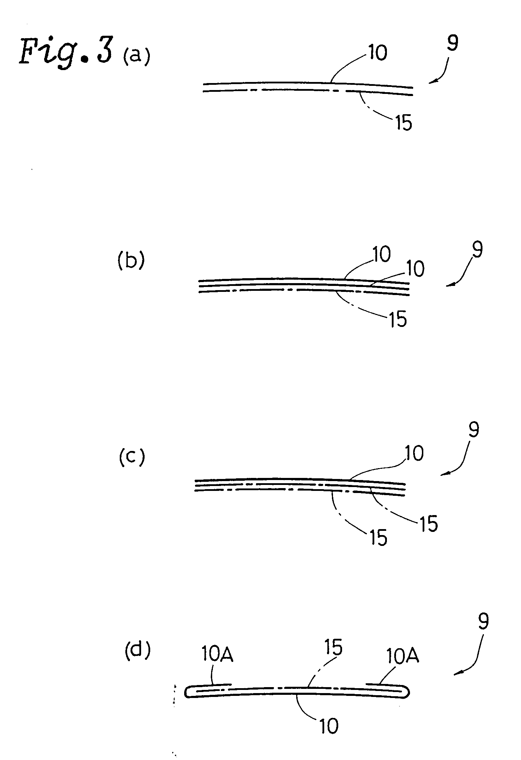

Figs.3(a) to (d) shows modifications of the belt 9 according to the invention. In each belt, at least one belt ply 10 made of the tridirectional woven organic fibre cord fabric is used in combination with at least one belt ply 15 made of unwoven steel cord fabric.

In Fig.3(a), the belt 9 is composed of one unwoven cord ply 15 disposed on the carcass 7 and one woven cord ply 10 disposed thereon.

In Fig.3(b), the belt 9 is composed of one unwoven cord ply 15 disposed on the carcass 7 and two woven cord plies 10 disposed thereon.

In Fig.3(c), the belt 9 is composed of two unwoven cord plies 15 disposed on the carcass 7 and one woven cord ply 10 disposed thereon.

In Fig.3(d), the belt 9 is composed of one woven cord ply 10 disposed on the carcass 7 and one unwoven cord ply 15 disposed thereon, and the edges of the woven cord ply 10 are folded upon the ply 15 so as to wrap the edges thereof by the folded portions 10A.

In the belts 9 shown in Figs.3(a)-(d), the fabrics shown in Figs.2(a)-(b) can be used.

Test tyres of size 185/70R14 weie prepared and tested for wear resistance, steering stability, high speed durability and tyre weight comparisons.

The tyre structures were the same as Fig.1 except for their belt structures. The specifications of the belt structures and test results are given in Table 1. Note that tyres Ref 1 and Ref 2 were reference tyres without woven cord plies for comparison purposes. The carcass structure was as follows:

| Carcass | |
|---------|---|
| *Cord | polyester 1000d/2 |
| *Count | 37 ends/5 cm |
| *Angle | 90 degrees to tyre circumferential direction |

The test results are indicated by an index based on that for reference tyre 1 set at 100. For tyre weight, a smaller index is better. For other tests, the larger the index, the better the performance.

Table 2 shows the specifications of the cords A, B, C and D used in the test tyres as indicated in Table 1.

TABLE 1

| Tire | Ex.1 | Ex.2 | Ex.3 | Ex.4 | Ex.5 | Ref.1 | Ref.2 |
|---|---|---|---|---|---|---|---|
| Belt | | | | | | | |
| *Structure | Fig.1 | Fig.3(a) | Fig.3(b) | Fig.3(c) | Fig.3(d) | Fig.4 * | Fig.4 |
| *Tridirectional Woven Aramid Cord Fabric Ply | | | | | | | |
| *Ply no. | 2 | 1 | 2 | 1 | 1 | --- | --- |
| *Cord | C | C | B | B | A | --- | --- |
| *Unwoven Steel Cord Fabric Ply | | | | | | | |
| *Ply no. | --- | 1 | 1 | 2 | 1 | 2 | 2 |
| *Cord | --- | D | D | D | D | D | D |
| *Unwoven Nylon Cord Fabric Ply | | | | | | | |
| *No. of winding | --- | --- | --- | --- | --- | 2 | --- |
| *Cord | --- | --- | --- | --- | --- | nylon66 840d/2 | --- |
| Wear resistance | 90 | 92 | 95 | 105 | 98 | 100 | 100 |
| Steering stability | 80 | 95 | 98 | 105 | 95 | 100 | 100 |
| High speed durability | 105 | 95 | 105 | 110 | 100 | 100 | 95 |
| Tire weight | 85 | 95 | 95 | 105 | 90 | 100 | 98 |

(*) two band plies were added by winding unwoven nylon cord fabric
    around the two unwoven steel cord plies.

TABLE 2

| Cord | A | B | C | D |
|---|---|---|---|---|
| Material | aromatic polyamide | aromatic polyamide | aromatic polyamide | steel |
| Structure | 1500d/2 | 1500d/2 | 1500d/2 | 1X5(0.25) |
| Strength (kgf) | 43 | 35 | 47 | 65 |
| Elongation (%) | 1.3+-0.4 | 2.5+-0.4 | 2.0+-0.4 | 1.8+-2 |

EP 0 506 490 A1

## Claims

1. A pneumatic tyre comprising a carcass (7) extending between bead portions (3) and a belt (9) disposed radially outside the carcass (7), characterised in that the belt (9) comprises a ply of woven cord fabric (10) which comprises cords in three groups (12X, 12Y, 12Z) woven together, the cords in each of the three groups (12X, 12Y, 12Z) are laid parallel with each other, and the cord direction (x) of the first cord group (12X), the cord direction (y) of the second cord group (12Y) and the cord direction (z) of the third cord group (12Z) are different from each other.

2. A pneumatic tyre according to claim 1, characterised in that the cord direction (x) of the first cord group (12X) is the circumferential direction (CO) of the tyre.

3. A pneumatic tyre according to claim 1, characterised in that all the three cord directions (x, y, z) of the first to third cord groups (12X, 12Y, 12Z) are not the circumferential direction (CO) of the tyre.

4. A pneumatic tyre according to claim 1, characterised in that the angle of the first group cords (12X) is substantially zero, the angle (alpha) of the second group cords (12Y) is substantially 60 degrees, and the angle (beta) of the third group cords (12Z) is substantially 60 degrees, all with respect to the circumferential direction (CO) of the tyre.

5. A pneumatic tyre according to claim 1, characterised in that the angle (gamma) of the first group cords (12X) is in the range of +10 to +30 degrees, the angle (alpha) of the second group cords (12Y) is in the range of -10 to -30 degrees, and the angle (beta) of the third group cords (12Z) is in the range of +40 to +70 degrees, all with respect to the circumferential direction (CO) of the tyre.

6. A pneumatic tyre according to claim 1, characterised in that the angle (gamma) of the first group cords (12X) is in the range of +10 to +45 degrees, the angle (alpha) of the second group cords (12Y) is in the range of - 10 to -45 degrees, and the angle (beta) of the third group cords (12Z) is in the range of +10 to +45 degrees, all with respect to the circumferential direction (CO) of the tyre.

7. A pneumatic tyre according to any one of claims 1 to 6, characterised in that the belt cords are organic fibre cords.

8. A pneumatic tyre according to any one of claims 1 to 6, characterised in that the belt cords are aromatic polyamide fibre cords.

9. A pneumatic tyre according to any one of claims 1 to 8, characterised in that the belt (9) is made of only said tridirectional woven cord fabric (10).

10. A pneumatic tyre according to any one of claims 1 to 8, characterised in that the belt (9) is composed of said tridirectional woven cord fabric ply (10) and at least one ply (15) of unwoven fabric.

11. A pneumatic tyre according to claim 10 characterised in that the unwoven fabric ply comprises steel cord fabric.

# Fig.1

# Fig.2 (a)

# Fig.2 (b)

*Fig.3* (a)

(b)

(c)

(d)

*Fig.4*

**European Patent Office**

# EUROPEAN SEARCH REPORT

Application Number

EP    92 30 2797

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | WORLD PATENTS INDEX LATEST Week 9145, Derwent Publications Ltd., London, GB; AN 91329324 & JP-A-3 220 338 (OHTSU TIRE K.K.) 27 September 1991 * abstract * | 1-4,7 | B60C9/20 D03D13/00 |
| Y | US-A-4 438 173 (W.C.TROST) * column 3, line 23 - line 59; claims; figures * | 1-10 | |
| Y | DE-B-1 272 753 (FA. CARL FREUDENBERG) * claims; figure * | 1-10 | |
| A | DE-A-2 038 305 (VEB REIFENKOMBINAT) | 1-11 | |
| | | | **TECHNICAL FIELDS SEARCHED (Int. Cl.5 )** |
| | | | B60C D03D |

The present search report has been drawn up for all claims

| Place of search | Date of completion of the search | Examiner |
|---|---|---|
| THE HAGUE | 15 JULY 1992 | BARADAT J.L. |